# EUROPEAN PATENT SPECIFICATION

(11) **EP 4 426 548 B1**
(45) Date of publication and mention of the grant of the patent: **31.12.2025**
(21) Application number: 22805961.4
(22) Date of filing: 03.11.2022
(51) Int. Cl.: B29D 30/06, B29D 30/72, B29C 33/30, B29C 33/42

(54) **METHOD AND ACTUATING DEVICE FOR APPLYING AN INSERT TO A VULCANIZATION MOLD AND PROCESS FOR PRODUCING TYRES FOR VEHICLE WHEELS IN WHICH SAID VULCANIZATION MOLD IS USED**
VERFAHREN UND BETÄTIGUNSVORRICHTUNG ZUM EINBRINGEN EINES EINSATZES AN EINER VULKANISATIONSFORM UND VERFAHREN ZUR HERSTELLUNG VON REIFEN FÜR FAHRZEUGRÄDER BEI DEM DIE VULKANISATIONSFORM VERWENDET WIRD
PROCÉDÉ ET DISPOSITIF D'ACTIONNEMENT POUR L'INSERTION D'UN INSERT SUR UN MOULE DE VULCANISATION ET PROCÉDÉ DE FABRICATION DE PNEUMATIQUES POUR ROUES DE VÉHICULES DANS LEQUEL CE MOULE EST UTILISÉ

(30) Priority: 04.11.2021 IT 202100028067
(43) Date of publication of application: 11.09.2024
(73) Proprietor: Pirelli Tyre S.p.A., 20126 Milano (IT)
(72) Inventor: PALUMBO, Claudia, 20126 Milano (IT); BOSISIO, Roberto, 20126 Milano (IT); CONTI, Davide Abramo, 20126 Milano (IT)
(74) Representative: Porta & Consulenti Associati S.p.A.
(86) International application number: PCT/IB2022/060590
(87) International publication number: WO 2023/079476

(56) References cited:
- WO-A1-2015/114097
- WO-A1-2018/200828
- WO-A1-2020/240487
- DE-A1- 10 228 549
- DE-A1- 102018 221 100
- US-A- 2 296 016
- US-A- 5 653 840
- US-A1- 2011 180 200

## Description

The present invention relates to a method and an actuating device for applying an insert to a vulcanization mold of tyres for vehicle wheels.

The invention also relates to a process for producing tyres for vehicle wheels in which the aforementioned vulcanization mold and the aforementioned actuating device are used.

The inserts used in the present invention contain an information to be printed on at least one sidewall of the tyre. Such an information is printed on the sidewall of the tyre during a molding and vulcanization process of the tyre. Such a process is carried out in a vulcanization mold.

Hereinafter, the term "information" is used to indicate any graphical representation including characters and/or symbols and/or numbers and/or shapes and/or colors.

The term "optical code" is used to indicate an element containing an encoded information. A particular example of optical code is constituted by linear codes (like for example barcodes or stacked codes) or two-dimensional codes (also known as QR codes) in which the information is coded by suitable combinations of elements having a predetermined shape, for example squares, rectangles or hexagons, of dark color (normally black) separated by light-colored elements (normally white spaces), color codes, etc. Furthermore, the term "optical code" generally also comprises other graphic shapes having a function of coding information, including cleartext printed characters (letters, numbers, etc.) and particular patterns (such as for example, stamps, logos, signatures, fingerprints, etc.). The term "optical code" also comprises graphic depictions that may be detected not only in the field of visible light but also in the range of wave lengths comprised between infrared and ultraviolet.

The term "green tyre" is used to indicate a tyre obtained from the manufacturing process and not yet molded and vulcanized.

The term "tyre" or *"*finished tyre" is used to indicate a tyre obtained by subjecting a green tyre to a molding and vulcanization process in a vulcanization mold.

The term "molding chamber" is used to indicate a chamber defined inside the vulcanization mold when the vulcanization mold is closed to carry out the molding and vulcanization process. The molding chamber is symmetrical with respect to a horizontal center plane thereof and to a vertical center plane thereof, except for the presence of recesses and projections on the sectors in the case an asymmetrical tread pattern has to be possibly made.

The term *"*actuating device" is used to indicate a device capable of controlling the movement of at least one component thereof after having been activated and of interrupting such movement after having been deactivated.

The term "automatic*"* is used to indicate an operation carried out by an actuating device without the need for manual interventions by an operator, apart from those necessary to activate and deactivate the actuating device.

The term "equatorial plane" of the tyre is used to indicate a plane perpendicular to the axis of rotation of the tyre and dividing the tyre into two symmetrically equal parts, apart from possible inequalities due to an asymmetrical tread pattern. When the tyre is arranged in the vulcanization mold and the latter is closed, the rotation axis of the tyre is oriented along a vertical direction and the equatorial plane of the tyre, which is therefore oriented along a horizontal direction, coincides with the horizontal center plane of the molding chamber.

The terms "radial" and "axial" and the expressions "radially inner/outer" and "axially inner/outer" are used, respectively, with reference to a direction substantially parallel to the equatorial plane of the tyre (or to the horizontal center plane of the molding chamber) and a direction substantially perpendicular to the equatorial plane of the tyre (or to the horizontal center plane of the molding chamber), i.e. to a direction substantially perpendicular to the axis of rotation of the tyre arranged in the vulcanization mold and a direction substantially parallel to the axis of rotation of said tyre.

The terms "circumferential" and "circumferentially" are used with reference to the direction of the annular development of the tyre arranged in the vulcanization mold, i.e. to the rolling direction of the tyre, which corresponds to a direction lying in a plane coinciding with or substantially parallel to the equatorial plane of the tyre.

The terms "upper", "lower", "top", "bottom", "above", "below" are used to indicate a relative position with respect to the ground. Therefore, "lower" "top" and "above" indicate a position having a greater distance from the ground than that of the position indicated with "lower", "bottom" and "below".

Typically, a tyre for vehicle wheels comprises a carcass structure comprising at least one carcass ply formed from reinforcing cords incorporated in a matrix of elastomeric material. The carcass ply has opposite end edges, each of which is engaged with a respective annular anchoring structure.

The annular anchoring structures are arranged in the areas of the tyre usually identified with the name "beads" and each of them is usually formed by a substantially circumferential annular insert on which at least one filling insert is applied, in a radially outer position thereof. Such annular inserts are commonly identified as "bead cores" and have the task of keeping the tyre properly fixed to the anchoring seat specially provided in the rim of the wheel, thus preventing the radially inner end edge of the tyre from coming out from such a seat during operation.

A crown structure is associated in a radially outer position with respect to the carcass structure.

The crown structure comprises a belt structure and, in a radially outer position with respect to the belt structure, a tread band made of elastomeric material.

The belt structure comprises a belt layer, or a plurality of belt layers arranged radially juxtaposed over one another, having textile or metallic reinforcing cords which are oriented substantially parallel to the direction of circumferential extension of the tyre (zero degrees belt layer) or, in the case of a plurality of belt layers, having a crossed orientation.

In this last case, said zero degrees belt layer can be provided in a radially outer position with respect to the belt layers having a crossed orientation.

Respective sidewalls made of elastomeric material are applied on the opposite side surfaces of the carcass structure. Each sidewall extends from the respective annular anchoring structure up to a respective side edge of the tread band.

The opposite sidewalls of the tyres are made during the molding and vulcanization process due to the pressure exerted on corresponding portions of the green tyre by a lower sidewall plate and by an upper sidewall plate of the vulcanization mold, respectively.

A plurality of information, some of which being encoded in optical codes, is printed on the sidewalls of the tyres.

Tyres having optical codes printed on the sidewalls are described, for example, in EP 3741585 A1, DE 102018200204 A1, EP 3613571 A1.

The application of such information/optical codes on the sidewalls of the tyres can take place during the molding and vulcanization process of the tyre after having mounted on the vulcanization mold, and in particular in one or both of the sidewall plates thereof, inserts containing such information/optical codes. In particular, an insert is applied only in the lower sidewall plate of the vulcanization mold in the case in which asymmetrical tyres are to be made, whereas an identical insert is also applied in the upper sidewall plate of the vulcanization mold in the case in which symmetrical tyres are to be made.

JP 2011031519 A, WO 2020/250070A1, WO 2020/250069 A1, WO 2020/250072 A1, WO 2021/064517 A1 describe vulcanization molds comprising inserts containing information/optical codes to be printed on the sidewalls of tyres.

US 2011/180200 A1 describes a method for selectively forming indicia of a tire sidewall, the method comprising the steps of engaging a surface of an uncured tire by a first indicia forming member of a tire mold member, detaching the first indicia forming member from the tire mold member by a hand tool and securing a second indicia forming member to the tire mold member by an impact device.

DE 102018221100 A1 describes a device for inserting side wall stickers into recesses on a side wall shell of an open vulcanization mold of a tire heating press. The device comprises a buffer on which a side wall sticker can be positioned with the back side facing upwards, a tool with vacuum suction cups for gripping the side wall sticker on its back side and a program-controlled robot coupled to the tool for picking up the side wall sticker positioned on the buffer. The tool is subsequently moved together with the side wall sticker held by vacuum suction cups into the area of the open vulcanization mold and the side wall sticker is positioned in the recess of the side wall shell.

However, the inserts must be removable from the vulcanization molds and replaceable with other inserts in order to have the vulcanization molds always equipped with inserts containing updated information.

The Applicant has observed that the operations of replacement of the inserts mounted on the vulcanization molds inevitably involve a loss of productivity, such a loss being greater as the number of vulcanization molds involved in the replacement of the inserts increases. Moreover, since an intervention inside the vulcanization molds has to take place, it is necessary to adopt provisions adapted to obtain the necessary safety conditions for the operators involved in such operations. Furthermore. such operators often work in uncomfortable positions, particularly when it is necessary to replace the inserts mounted on the upper sidewall plates of the vulcanization molds, like in the case of molds configured to make symmetrical tyres.

The Applicant has also observed that the position of the inserts in the upper sidewall plates of the vulcanization molds is such that in order to be able to mount and dismount an insert it is often necessary to dismount the upper sidewall plate, with further intervention burdens for the operators and further loss of time, and consequent loss of productivity.

The Applicant has thought how to simplify and speed up the mounting operation of an insert on the upper sidewall plate of a vulcanization mold, with the aim of limiting as much as possible the aforementioned loss of productivity and facilitating the intervention of the operators, with a benefit also to their safety, while avoiding the operators' burden of having to dismount and remount the upper sidewall plate.

The Applicant has perceived that a way to simplify and speed up such a mounting operation is to provide a part of such an operation to be carried out automatically by an actuating device configured to support the insert before it is applied on the upper sidewall plate and to apply the insert on the upper sidewall plate after having properly positioned the actuating device with respect to the upper sidewall plate and activated.

The Applicant has realized that it is possible to achieve a stable and precise positioning of the actuating device with respect to the upper sidewall plate by positioning the actuating device in the insert housing seat typically provided in the lower sidewall plate of the vulcanization mold. Indeed, due to the fact that such a seat is made in a symmetrical position with respect to that of the insert housing seat provided in the upper sidewall plate with respect to the horizontal center plane of the molding chamber, it is vertically aligned with the latter and can thus act as a reference for the correct positioning of the actuating device with respect to the upper sidewall plate.

The Applicant has finally found that by associating an end of the actuating device with a positioning device configured to be positioned in the insert housing seat provided in the lower sidewall plate of the vulcanization mold and associating the opposite end of the actuating device with a holding device of the insert, it is possible, after having positioned the positioning device in the aforementioned insert housing seat and having activated the actuating device, to apply the insert automatically in the insert housing seat provided in the upper sidewall plate of the vulcanization mold, thus achieving the desired simplification and speeding up of the mounting operation of the insert on the upper sidewall plate.

The present invention therefore relates, in a first aspect thereof, to a method for applying an insert to a vulcanization mold of tyres for vehicle wheels according to claim 1.

The Applicant observes that following the positioning of the positioning device in the insert housing seat provided in the lower sidewall plate, the actuating device is arranged below the insert positioning seat provided in the upper sidewall plate and oriented along a direction perpendicular to the horizontal center plane of the molding chamber, with the holding device being faced to the first insert housing seat. At this point the application of the insert in the upper sidewall plate of the vulcanization mold simply involves the activation of the actuating device.

In a second aspect thereof, the invention relates to a process for producing tyres for vehicle wheels according to claim 14.

The Applicant observes that such a process allows tyres having information printed on at least one of their sidewalls to be made.

In a third aspect thereof, the invention relates to an actuating device according to claim 15, the actuating device being configured to be activated to carry out the method according to the first aspect of the present invention.

The Applicant observes that such an actuating device allows the actuation of the method described above and, therefore, it allows tyres having information printed on at least one of their sidewalls to be made.

In at least one of the aforesaid aspects, the present invention can present at least one of the preferred characteristics described below.

Preferably the positioning device has a shape at least partially matching a shape of the second insert housing seat.

In this case a shape coupling between positioning device and insert housing seat provided in the lower sidewall plate is obtained. Such a shape coupling contributes to obtaining a stable and centered coupling of the actuating device in the insert housing seat provided in the lower sidewall plate and, consequently, the correct and precise positioning of the actuating device with respect to the insert housing seat provided in the upper sidewall plate.

Preferably, the second insert housing seat has a shape identical to a shape of the first insert housing seat. In this case, the positioning device has a shape at least partially matching that of the insert housing seat provided in the upper sidewall plate, thus making it even quicker obtaining the correct and precise positioning of the actuating device with respect to such an insert housing seat once the positioning device is positioned in the insert housing seat provided in the lower sidewall plate.

Preferably, the positioning device comprises a first fastening pin configured to be removably locked in the second insert housing seat.

Preferably, the second insert housing seat comprises a first calibrated hole configured to receive the first fastening pin when the positioning device is positioned in the second insert housing seat.

The coupling between the first fastening pin and the aforementioned first calibrated hole allows to obtain in a simple, quick and effective way the correct and precise positioning of the positioning device in the insert housing seat provided in the lower sidewall plate and, consequently, the correct and precise positioning of the actuating device with respect to the insert housing seat provided in the upper sidewall plate.

Preferably, the second insert housing seat comprises a plurality of first elastic elements configured to cooperate with said first fastening pin when the positioning device is positioned in the second insert housing seat, more preferably when the first fastening pin is inserted in the first calibrated hole.

The coupling between the aforementioned elastic elements and the first fastening pin allows the positioning device to be effectively kept in position in the insert housing seat provided in the lower sidewall plate, without preventing the removal thereof when necessary. Such a coupling, together with the shape coupling between positioning device and insert housing seat provided in the lower sidewall plate, also allows undesired relative movements between actuating device and insert housing seat provided in the upper sidewall plate to be prevented, to the benefit of the correct positioning of the insert in the latter housing seat after the activation of the actuating device.

Preferably, the insert comprises, on the opposite side to said first main surface, a second fastening pin configured to be removably coupled with the first insert housing seat.

Preferably, the first insert housing seat comprises a second calibrated hole configured to receive the second fastening pin when the insert is positioned in the first insert housing seat.

Preferably, the first insert housing seat comprises a plurality of second elastic elements configured to cooperate with said second fastening pin when the insert is positioned in the first insert housing seat, more preferably when the second fastening pin is inserted in said second calibrated hole.

In preferred embodiments, the first fastening pin is identical to the second fastening pin.

Preferably, the second calibrated hole is identical to the first calibrated hole.

Preferably, the second elastic elements are identical to the first elastic elements.

The coupling between insert and insert housing seat provided in the upper sidewall plate is actuated by members which are provided to be totally identical to those provided for the coupling between positioning device and insert housing seat provided in the lower sidewall plate.

Preferably, the actuating device comprises a first visual reference element. Such an element allows the operator to correctly orient the actuating device before positioning the positioning device in the insert housing seat provided in the lower sidewall plate.

More preferably, said first visual reference element is associated with the positioning device.

Preferably, the actuating device comprises a second visual reference element. More preferably, such a second visual reference element is associated with the holding device. Such an element allows the operator to correctly orient the holding device with respect to the insert and the positioning device.

For example, the first and/or second visual reference element can be an inscription or a symbol or any other element which is visually detectable by the operator.

Preferably, before positioning the positioning device in the second insert housing seat the upper sidewall plate is held in position at a first axial distance from the lower sidewall plate. In this way, the upper sidewall plate does not hinder the operator during the positioning of the positioning device in the insert housing seat provided in the lower sidewall plate, such an operator thus being able to act in full safety and without encountering physical obstacles.

Preferably, after having positioned the positioning device in the second insert housing seat and before activating the actuating device the upper sidewall plate is moved towards the lower sidewall plate until a predetermined second axial distance from the lower sidewall plate is reached. Such a second distance can vary depending on the type of the vulcanization mold and it is always such as to allow tyres of all the desired sizes to be made with the same vulcanization mold and the same actuating device.

Preferably, positioning the insert on the holding device comprises positioning a support element on the holding device. Since the main surface of the insert has a profile that changes depending on the type of tyre to be made, and therefore depending on the upper sidewall plate used each time, the use of the aforementioned support element makes it possible to use the same holding device irrespective of the surface profile of the upper sidewall plate used each time.

Preferably, positioning the insert on the holding device comprises positioning the insert on the support element with said main surface facing towards the support element.

Preferably, the support element comprises a service surface having a profile matching that of said main surface.

Preferably, positioning the insert on the support element comprises coupling said main surface and said service surface. In this way, a shape coupling is made between insert and support element, to the benefit of the precision and repeatability of the positioning of the insert in the insert housing seat provided in the upper sidewall plate.

Preferably, the holding device comprises a recessed seat.

Preferably, the support element comprises a first portion configured to be housed in the recessed seat. Such a first portion always has the same shape whatever the insert that is used depending on the profile of the sidewall of the tyre to be made and, therefore, on the surface profile of the upper sidewall plate.

Preferably, said first portion has a shape matching that of said recessed seat. In this way, a stable and precise positioning of the support element in the holding device is obtained.

Preferably, the support element comprises a second portion configured to project with respect to the holding device.

Preferably, said service surface is defined in the second portion of the support element.

The support element thus acts as interface element between insert and actuating device and allows a stable and precise positioning of the insert on the holding device before proceeding with the application of the insert in the insert housing seat provided in the upper sidewall plate.

Preferably, the support element comprises a third visual reference element. Such an element allows the operator to correctly orient the support element with respect to the holding device.

For example, the third visual reference element can be an inscription or a symbol or any other element which is visually detectable by the operator.

Preferably, the positioning of the support element on the holding device is carried out before positioning the positioning device in the second insert housing seat.

Preferably, the positioning of the insert on the support element is carried out after having positioned the positioning device in the second insert housing seat. In this way, the risk of having undesired movements of the insert with respect to the holding device during the positioning of the actuating device in the insert housing seat provided in the lower sidewall plate is eliminated.

Preferably, the insert is made of a metal material.

Preferably, the support element is made of a non-metallic material, for example a plastic material, for example Teflon.

Preferably, the support element comprises at least one first magnetic element. Such a magnetic element makes it possible to hold the insert in position on the support element and to keep it in position up to the moment when the insert is applied in the insert housing seat provided in the upper sidewall plate.

Preferably, said information is contained in an optical code, more preferably in a QR code. Such a type of code is particularly preferred because it can contain a large amount of data and information.

Preferably, it is provided for being able to remove the insert from the first insert housing seat after having positioned the insert in the first insert housing seat. The removal of the insert becomes necessary for example after having completed a production cycle of a first type of tyre and before starting a new production cycle of a second type of tyre, in which case it is necessary to mount on the upper sidewall plate a new insert containing different information from that contained in the previous insert.

Preferably, removing the insert from the first insert housing seat comprises positioning an emission nozzle of a compressed air gun in a first through hole that is formed in the upper sidewall plate and open in the first insert housing seat.

Preferably, removing the insert from the first insert housing seat comprises activating the compressed air gun.

The use of compressed air allows the removal of the insert in a simple, fast and effective manner.

Preferably, before positioning the emission nozzle of the compressed air gun in said first through hole a collection tank is associated with the compressed air gun.

Preferably, after having positioned the emission nozzle of the compressed air gun in said first through hole the collection tank is oriented so that it is arranged below the first insert housing seat.

Preferably, the compressed air gun comprises at least one extension element. Such an extension element allows a pneumatic coupling to be made between compressed air gun and upper sidewall plate when, as occurs in almost all cases, the upper sidewall plate is at a distance from the ground that cannot be reached by the operator without the help of the extension element.

Depending on the position of the first through hole in the upper sidewall plate, the extension element can have an emission spout oriented along the direction of extension of the extension element or perpendicular with respect to the direction of extension of the extension element.

Preferably, the collection tank is associated with said at least one extension element, so that it can be positioned in close proximity with respect to the insert housing seat provided in the upper sidewall plate.

Preferably, the collection tank comprises a light source. Such a light source allows the operator to easily identify the position of the first through hole in the upper sidewall plate to then be able to easily position the emission nozzle of the compressed air gun, or the spout of the extension element, in the aforementioned first through hole.

Preferably, the collection tank comprises at least one second magnetic element. Such a magnetic element can for example take up the form of a mat and allows the insert to be kept in the tank after its removal from the upper sidewall plate, thus preventing the insert from accidentally falling to the ground or onto the operator.

Preferably, after having activated the actuating device, and therefore after having applied the insert in the upper sidewall plate and before a possible subsequent removal thereof, the positioning device is removed from the second insert housing seat.

In some embodiments, preferably, after having removed the positioning device from the second insert housing seat, a further insert is applied in the second insert housing seat. This happens, for example, when it is desired to make symmetrical tyres, in which the same information must be printed on both sidewalls of the tyre.

Preferably, such a further insert is identical to said insert.

Preferably, it is provided for being able to remove the further insert from the second insert housing seat after having applied the further insert in the second insert housing seat. Such a removal becomes necessary for the same reasons outlined above when discussing the possible removal of the insert from the first insert housing seat.

Preferably, removing the further insert from the second insert housing seat comprises positioning an emission nozzle of a compressed air gun in a second through hole that is formed in the lower sidewall plate and open in the second insert housing seat. Such a compressed air gun can be the same compressed air gun used for the removal of the insert from the insert housing seat provided in the upper sidewall plate.

Preferably, removing the further insert from the second insert housing seat comprises positioning a head of a gripping tool above the further insert and in contact with it.

Preferably, removing the further insert from the second insert housing seat comprises activating the compressed air gun.

Preferably, the activation of the compressed air gun takes place after having positioned the head of the gripping tool above the further insert, so as to hold the insert close to the lower sidewall plate after having been removed from its housing seat through the effect of the thrust exerted by the compressed air.

Preferably, the further insert is made of a metal material.

Preferably, the head of said gripping tool comprises at least one third magnetic element. Such a magnetic element makes it possible to hold the further insert coupled with the gripping tool until the gripping tool is moved away from the lower sidewall plate.

According to the invention, the actuating device comprises a cylinder extending along a longitudinal direction and a piston that is movable with respect to the cylinder along said longitudinal direction between a retracted position and an extended position.

Preferably, the maximum stroke of the piston with respect to the cylinder is such that, once the upper sidewall plate is positioned at the aforementioned second distance with respect to the lower sidewall plate, it is possible to make tyres of all desired dimensions with that specific vulcanization mold.

According to the invention, the cylinder comprises, at a free end thereof, said positioning device.

Preferably, the piston comprises, at a free end projecting from the cylinder, said holding device.

In the preferred embodiments of the invention, the actuating device is a pneumatic cylinder.

Further characteristics and advantages of the present invention will be more evident from the following description of preferred embodiments thereof made with reference to the appended drawings. In such drawings:
- figure 1 is a schematic partial half-cross sectional view of a portion of a tyre produced in accordance with the present invention;
- figure 2 is an exemplary schematic side view of the tyre of figure 1;
- figure 3 is a schematic view of a cross section of a vulcanization mold used in the present invention, such a mold being closed and a vulcanized tyre being placed therein;
- figure 4 is a schematic view of a portion of the vulcanization mold of figure 3 when it is open and without the aforementioned tyre;
- figure 5 is an exploded schematic view of an actuating device used in the present invention;
- figure 6 is a schematic view of the actuating device of figure 5 mounted in the vulcanization mold of figures 3 and 4 in an operative configuration of such a vulcanization mold;
- figure 7 is a sectional view of an enlargement of figure 6 with the actuating device in a first operating configuration thereof;
- figure 8 is a sectional view of an enlargement of figure 6 with the actuating device in a second operating configuration thereof;
- figure 9 is a sectional view of an enlargement of figure 6 with the actuating device in a third operating configuration thereof;
- figure 10 is a schematic view of a tool used in a first preferred embodiment of the present invention along with a section of a first type of vulcanization mold;
- figure 11 is a schematic view of an operating configuration following the one of figure 10;
- figure 12 is a schematic view of a tool used in a second preferred embodiment of the present invention along with a section of a second type of vulcanization mold;
- figure 13 is a schematic view of a first operating step of a preferred embodiment of the present invention;
- figure 14 is a schematic view of a second operating step of the embodiment of the present invention in which the tool of figure 12 is used;
- figure 15 is a schematic view of an operating step of a further preferred embodiment of the present invention.

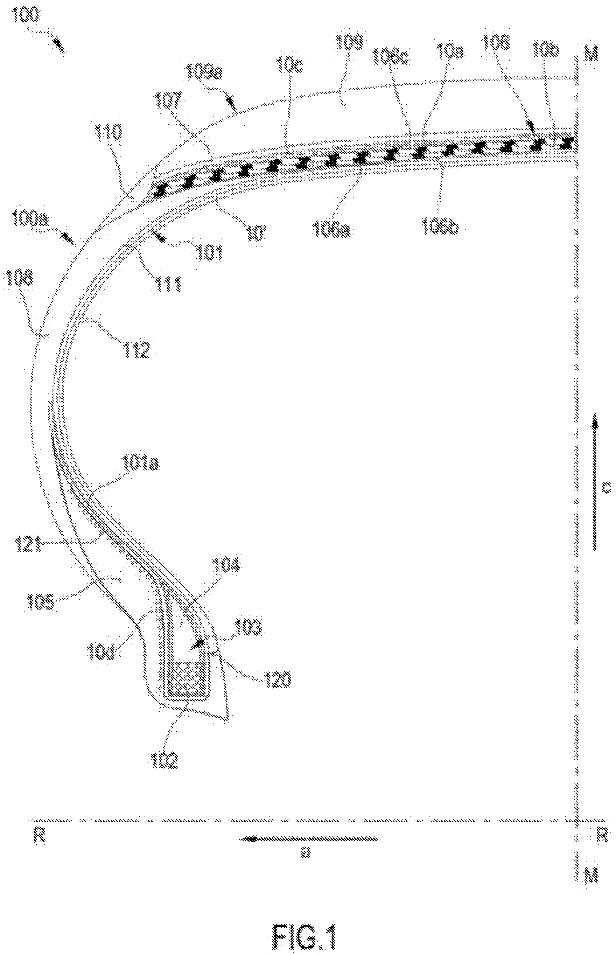

For the sake of simplicity, figure 1 shows only a part of an exemplary embodiment of a tyre 100 which can be made in accordance with the present invention, the remaining part, which is not represented, being substantially identical and being arranged symmetrically with respect to the equatorial plane M-M of the tyre.

The tyre 100 shown in figure 1 is, in particular, an examplary embodiment of a tyre for four-wheeled vehicles.

Preferably, the tyre 100 is a HP or UHP tyre for sports and/or high and ultra-high performance vehicles.

In Figure 1 *"*a*"* indicates an axial direction, "c" indicates a radial direction, "M-M" indicates the equatorial plane of the tyre 100 and "R-R" indicates the rotation axis of the tyre 100.

The tyre 100 comprises at least one support structure 100a and, in a radially outer position with respect to the support structure 100a, a tread band 109 made of elastomeric material.

The support structure 100a comprises a carcass structure 101, which in turn comprises at least one carcass ply 111.

Hereinafter, for the sake of simplicity of presentation, reference will be made to an embodiment of the tyre 100 comprising a single carcass ply 111. However, it is understood that what is described has analogous application in tyres comprising more than one carcass ply.

The carcass ply 111 has axially opposite end edges engaged with respective annular anchoring structures 102, called bead cores, possibly associated with an elastomeric filler 104. The area of the tyre 100 comprising the bead core 102 and the possible elastomeric filler 104 forms an annular reinforcing structure 103 called "bead structure" and configured to allow the anchoring of the tyre 100 on a corresponding mounting rim, not shown.

The carcass ply 111 comprises a plurality of reinforcing cords 10' coated with elastomeric material or incorporated in a matrix of cross-linked elastomeric material.

The carcass structure 101 is of the radial type, i.e. the reinforcing cords 10' are on planes comprising the rotation axis R-R of the tyre 100 and substantially perpendicular to the equatorial plane M-M of the tyre 100. In radial tyres having two or more carcass plies, the respective reinforcing cords have an angle different from 90° with respect to the equatorial plane, for example 84°-88°, and therefore they do not lie on planes comprising the rotation axis.

Each annular reinforcing structure 103 is associated with the carcass structure 101 through folding back (or turning) of the opposite end edges of the at least one carcass ply 111 around the bead core 102 and the possible elastomeric filler 104, so as to form the so-called turns 101a of the carcass structure 101.

An anti-abrasion strip 105 is arranged at each annular reinforcing structure 103 so as to wind the annular reinforcing structure 103 along the axially inner, axially outer and radially inner areas of the annular reinforcing structure 103, thus being interposed between the latter and the rim of the wheel when the tyre 100 is mounted on the rim. However, such an anti-abrasion strip 105 may not be provided.

The support structure 100a comprises, in a radially outer position with respect to the carcass structure 101, a crossed belt structure 106 comprising at least two belt layers 106a, 106b arranged in a radial juxtaposition with respect to one another.

The belt layers 106a, 106b comprise a plurality of reinforcing cords 10a, 10b, respectively. Such reinforcing cords 10a, 10b have an inclined orientation with respect to the circumferential direction of the tyre 100, or to the equatorial plane M-M of the tyre 100, by an angle comprised between 15° and 45°, preferably between 20° and 40°. For example, such an angle is equal to 30°.

The reinforcing cords 10a, 10b of a belt layer 106a, 106b are parallel to each other and have a crossed orientation with respect to the reinforcing cords of the other belt layer 106b, 106a.

The support structure 100a comprises, in a radially outer position with respect to the crossed belt structure 106, at least one zero degrees reinforcing layer 106c, commonly known as "zero degrees belt". It comprises reinforcing cords 10c oriented in a substantially circumferential direction. Such reinforcing cords 10c thus form an angle of few degrees (typically less than 10°, for example comprised between 0° and 6°) with respect to the equatorial plane M-M of the tyre 100.

The tread band 109 is applied in a radially outer position with respect to the zero degrees reinforcing layer 106c.

Respective sidewalls 108 made of elastomeric material are applied on the opposite side surfaces of the carcass structure 101, in an axially outer position with respect to the carcass structure 101 itself. Each sidewall 108 extends from one of the side edges of the tread band 109 up to the respective annular reinforcing structure 103.

The anti-abrasion strip 105, if provided, extends at least up to the respective sidewall 108.

In some specific embodiments, like the one shown and described herein, the stiffness of the sidewall 108 can be improved by providing a stiffening layer 120, generally known as "flipper" or additional strip-like insert, and which has the function of increasing the stiffness and integrity of the annular reinforcing structure 103 and of the sidewall 108.

The flipper 120 is wound around a respective bead core 102 and around the elastomeric filler 104 so as to at least partially surround the annular reinforcing structure 103. In particular, the flipper 120 winds around the annular reinforcing structure 103 along the axially inner, axially outer and radially inner areas of the annular reinforcing structure 103.

The flipper 120 is arranged between the turned end edge of the carcass ply 111 and the respective annular reinforcing structure 103. Usually, the flipper 120 is in contact with the carcass ply 111 and the annular reinforcing structure 103.

In some specific embodiments, like the one shown and described herein, the annular reinforcing structure 103 can also comprise a further stiffening layer 121 that is generally known by the term "chafer", or protective strip, and which has the function of increasing the stiffness and integrity of the annular reinforcing structure 103.

The chafer 121 is associated with a respective turned end edge of the carcass ply 111 in an axially outer position with respect to the respective annular reinforcing structure 103 and extends radially towards the sidewall 108 and the tread band 109.

The flipper 120 and the chafer 121 comprise reinforcing cords 10d (in the attached figures those of the flipper 120 are not visible) coated with an elastomeric material or incorporated in a matrix of cross-linked elastomeric material.

The tread band 109 has, in a radially outer position, a rolling surface 109a intended to come into contact with the ground. The rolling surface 109a has circumferential grooves (not shown in figure 1) formed on it, which are connected by transversal notches (not shown in figure 1) so as to define on the rolling surface 109a a plurality of blocks of various shapes and sizes (not shown in figure 1).

An under-layer 107 is arranged between said zero degrees reinforcing layer 106c and the tread band 109.

In some specific embodiments, like the one shown and described herein, a strip 110 consisting of elastomeric material, commonly known as "mini-sidewall", can optionally be provided in the area which connects the sidewalls 108 and the tread band 109. The mini-sidewall 110 is generally obtained through co-extrusion with the tread band 109 and allow an improvement of the mechanical interaction between the tread band 109 and the sidewalls 108.

Preferably, an end portion of the sidewall 108 directly covers the side edge of the tread band 109.

In the case of tubeless tyres, a layer of elastomeric material 112, generally known as "liner", can also be provided in a radially inner position with respect to the carcass ply 111 to provide the necessary impermeability to the inflation air of the tyre 100.

In the production cycle of the tyre 100 described above it is provided that, after a manufacturing process of a green tyre in which the various components of the tyre 100 are made and/or assembled, a molding and vulcanization process of the green tyre is carried out, the molding and vulcanization process being aimed at defining the structure of the tyre 100 according to a desired geometry, normally having a particular tread pattern.

The manufacturing of the green tyre can be carried out by assembling its respective semi-finished products on a forming support by at least one assembly device.

In particular, it is possible to assemble on the forming support an inner sleeve comprising the carcass structure 101 of the tyre 100, the annular reinforcing structures 103 and the sidewalls 108. More particularly, the forming support firstly receives the possible liner 112. Subsequently, the carcass structure 101 is formed by depositing the at least one carcass ply 111 and by forming the opposite annular reinforcing structures 103. Subsequently, the sidewalls 108 and the anti-abrasion strip 105 are positioned, if provided.

In an auxiliary forming support it is possible to assemble an outer sleeve comprising the belt structure 106, the possible zero degrees reinforcing layer 106c and the tread band 109.

Subsequently, the aforementioned outer sleeve is arranged in a coaxially centered and radially outer position with respect to the aforementioned inner sleeve and the green tyre thus assembled is shaped according to a toroidal configuration through a radial expansion of the inner sleeve, so as to associate the radially outer surface of the inner sleeve with the radially inner surface of the outer sleeve.

The green tyre thus shaped is subsequently subjected to a molding and vulcanization process aimed at determining the structural stabilization of the tyre through cross linking of the elastomeric material as well as at printing a desired tread pattern on the tread band 109.

For this purpose, the green tyre is arranged in a molding chamber 1a defined inside a vulcanization mold 1 and shaped according to the geometric configuration of the outer surfaces of the tyre 100 to be made.

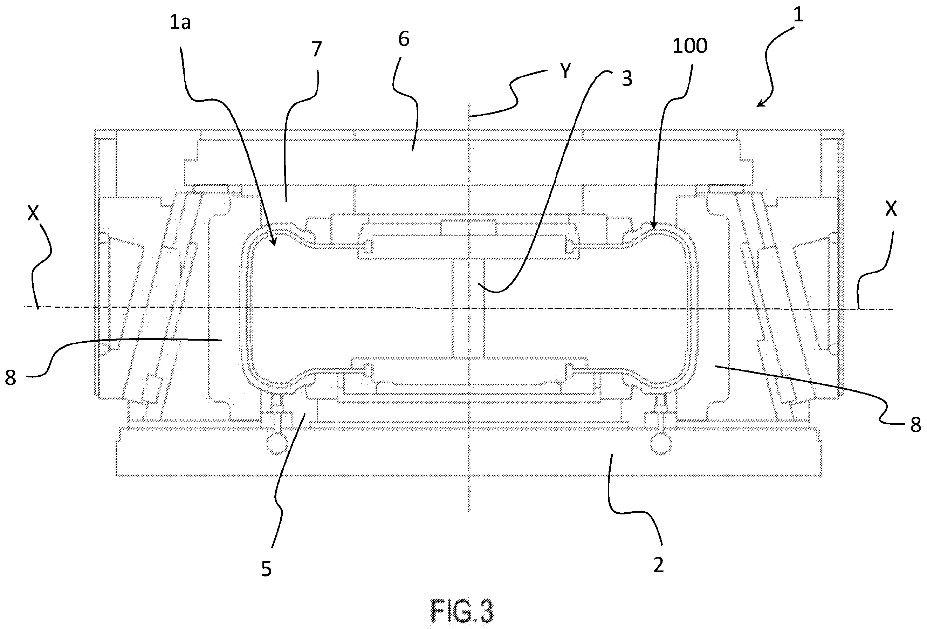

Figure 3 shows the tyre 100 in its final configuration taken up in the vulcanization mold 1 at the end of the molding and vulcanization process.

In the vulcanization mold 1 a geometric axis Y is defined that preferably coincides with the rotation axis of the green tyre when the latter is inserted in the vulcanization mold 1 and with the rotation axis R-R of the tyre 100 at the end of the molding and vulcanization process. The geometric axis Y lies on a vertical center plane of the molding chamber 1a.

The vulcanization mold 1 comprises a basement 2 from which a substantially cylindrical central body 3 projects above and having an axis of symmetry coinciding with the axis Y.

The central body 3 is preferably of the telescopic type, so that it can be adjusted in height, so as to adapt it to green tyres of different sizes and consequently be able to make corresponding tyres 100 of different sizes.

A lower sidewall plate 5 is fixed to the basement 2 and is centered with respect to the cylindrical central body 3. A sidewall of the green tyre is rested on the lower sidewall plate 5 when the latter is introduced into the vulcanization mold 1.

The vulcanization mold 1 further comprises a closing element 6 arranged above the lower sidewall plate 5 and movable with respect to the latter between an open position of the vulcanization mold 1, at which the introduction of the green tyre in the molding cavity 1a takes place, and a closed position of the vulcanization mold 1, at which the molding and vulcanization process begins.

An upper sidewall plate 7 is firmly fixed to the closing element 6. The upper sidewall plate 7 is configured to abut on the other sidewall of the green tyre when the vulcanization mold 1 is closed.

As shown in figure 3, the vulcanization mold 1 also comprises a crown of circumferential sectors 8 configured to abut tightly on the lower sidewall plate 5 and on the upper sidewall plate 7 when the vulcanization mold 1 is closed.

The circumferential sectors 8 circumscribe the molding chamber 1a and can carry a plurality of forming projections (not visible in figure 3) configured to create a plurality of notches and grooves in the tread band 109 and appropriately arranged according to the desired tread pattern.

A horizontal center plane X-X is defined in the molding chamber 1a. It is arranged between the lower sidewall plate 5 and the upper sidewall plate 7.

Preferably, the lower sidewall plate 5 and the upper sidewall plate 7 are removable in order to be able to replace them with sidewall plates having different diameter and surface profiles, so as to be able to make tyres of different sizes and types.

Similarly, the circumferential sectors 8 are preferably removable in order to be able to replace them with circumferential sectors having a different shape and tread pattern.

The surface profile of the lower sidewall plate 5 and of the upper sidewall plate 7 is substantially analogous to that of the sidewalls 108 of the tyre 100.

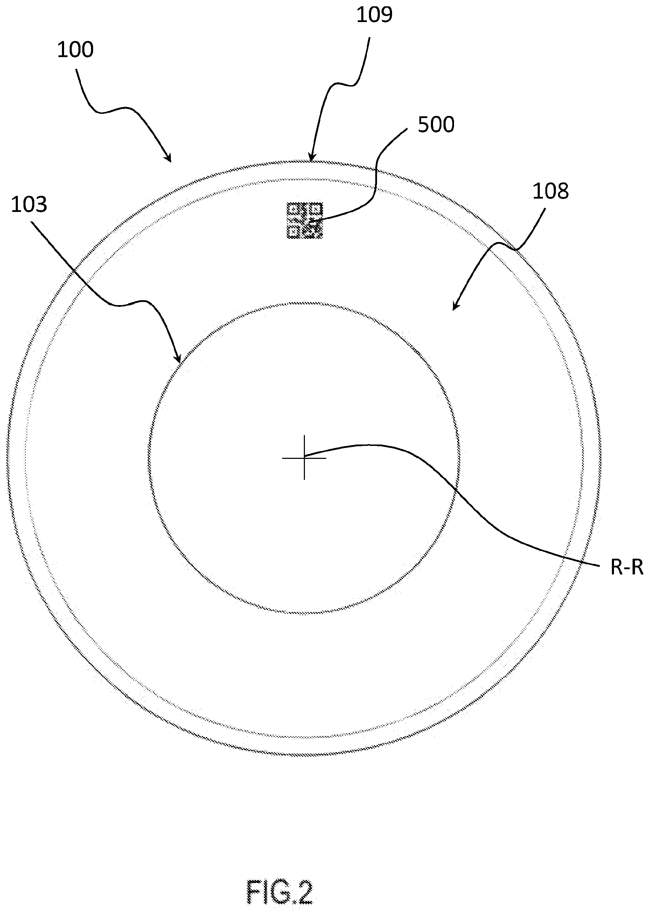

With reference to figure 2, an optical code, indicated with 500, is printed on at least one of the two sidewalls 108 of the tyre 100.

In the embodiment shown herein, the optical code 500 is a QR code that contains a plurality of information.

In the case of symmetrical tyres, like for example the one shown in figure 1 and schematized in figure 2 and in figure 3, a respective optical code 500 is printed on each of the two sidewalls 108 (in this case the two optical codes 500 preferably have identical content), whereas in the case of asymmetrical tyres the optical code 500 is printed on only one of the two sidewalls 108, in particular on the one which is in contact with the lower sidewall plate 5.

The application of the optical code 500 on the sidewalls 108 of the tyre 100 takes place during the molding and vulcanization process carried out inside the vulcanization mold 1.

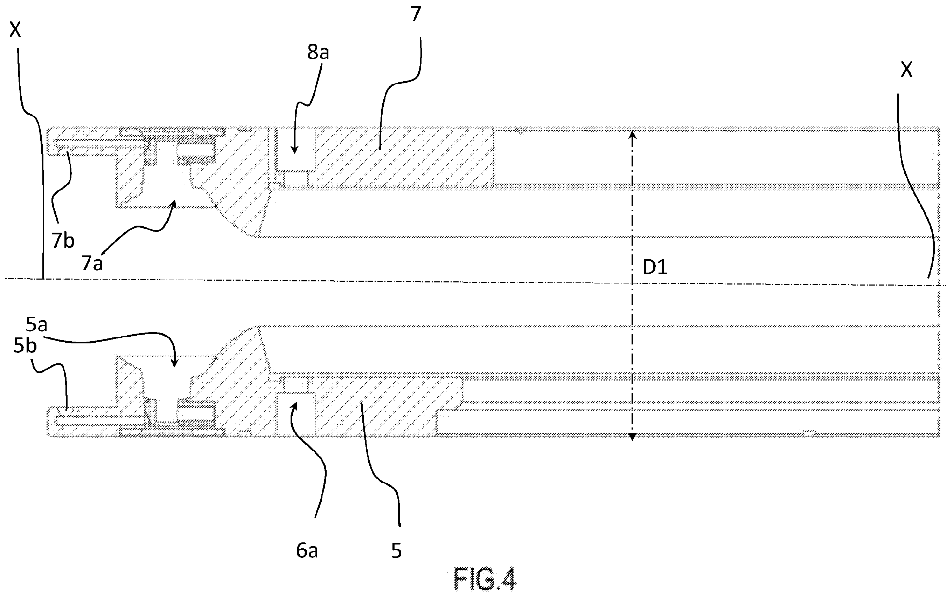

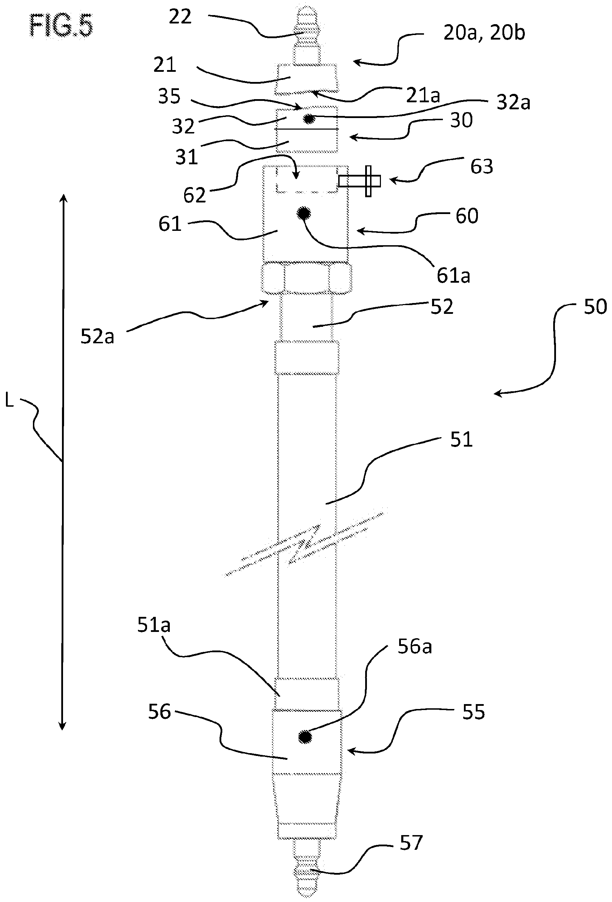

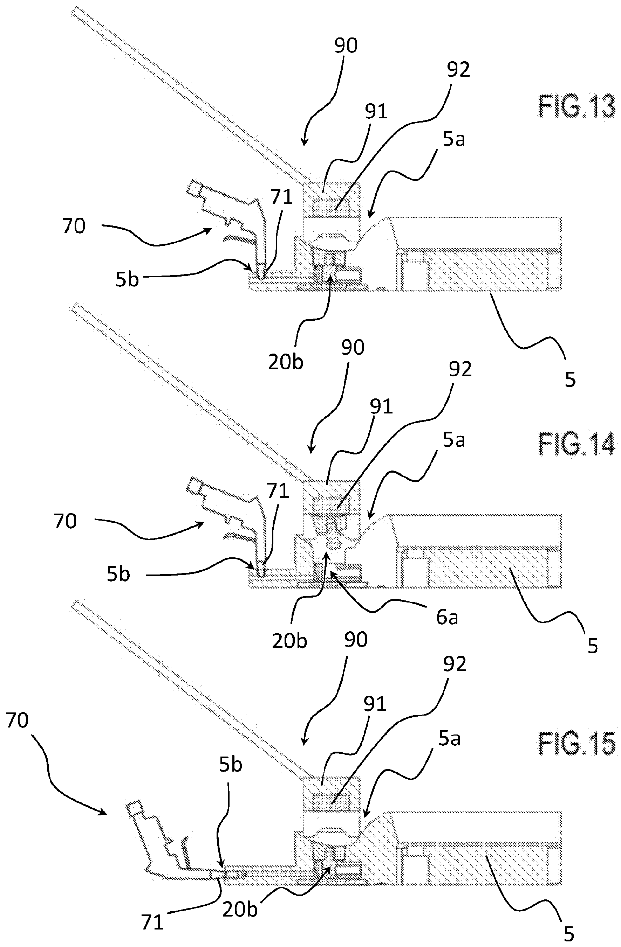

For this purpose, as shown in figure 4, the lower and upper sidewall plates 5, 7 comprise respective insert housing seats 5a, 7a, each of them being configured to receive a respective insert 20b, 20a. The insert 20a, shown in figure 5, is configured to be housed in the upper sidewall plate 7 and the insert 20b, shown in figures 13-15, is configured to be housed in the lower sidewall plate 5.

The insert housing seats 5a, 7a are symmetrically arranged on opposite sides with respect to the center plane X-X and therefore they are vertically aligned and faced to one another.

The insert housing seats 5a, 7a are formed on the respective lower and upper sidewall plates 5, 7 at respective annular portions having a center on the geometric axis Y and equal inner and outer diameters.

Each insert housing seat 5a, 7a is at a respective angular sector defined between two predetermined angles measured from the vertical center plane of the molding chamber 1a moving from such a vertical center plane along a predetermined travel direction.

The insert housing seats 5a, 7a are identical to one another.

The inserts 20a and 20b are made of a metallic material.

The inserts 20a and 20b are identical to one another and therefore only the insert 20a will be described hereinafter.

As shown in figure 5, the insert 20a (and 20b) comprises a main body 21 having a main surface 21a on which the optical code 500 is engraved, for example by laser, and a fastening pin 22 extending from the main body 21 on the opposite side with respect to the main surface 21a.

The main surface 21a has a profile identical to the profile of the corresponding portion of sidewall 108 of the tyre 100 made inside the vulcanization mold 1.

As shown in figure 4, each insert housing seat 5a, 7a comprises a calibrated hole 6a, 8a configured to removably receive the fastening pin 22 of the respective insert 20a, 20b.

Each insert housing seat 5a, 7a also comprises a plurality of elastic elements (not shown) configured to cooperate with the fastening pin 22 to hold it in position in the calibrated hole 6a, 8a without however preventing it from coming out after the application of a suitable stress.

The elastic elements provided in the insert housing seat 5a are identical to those provided in the insert housing seat 7a.

The lower sidewall plate 5 comprises a through hole 5b that is open in the insert housing seat 5a. Depending on the types of vulcanization mold, such a through hole 5b can extend along a direction parallel to the geometric axis Y, as shown for example in figures 4, 13 and 14, or along a direction parallel to the center plane X-X, as shown for example in figure 15.

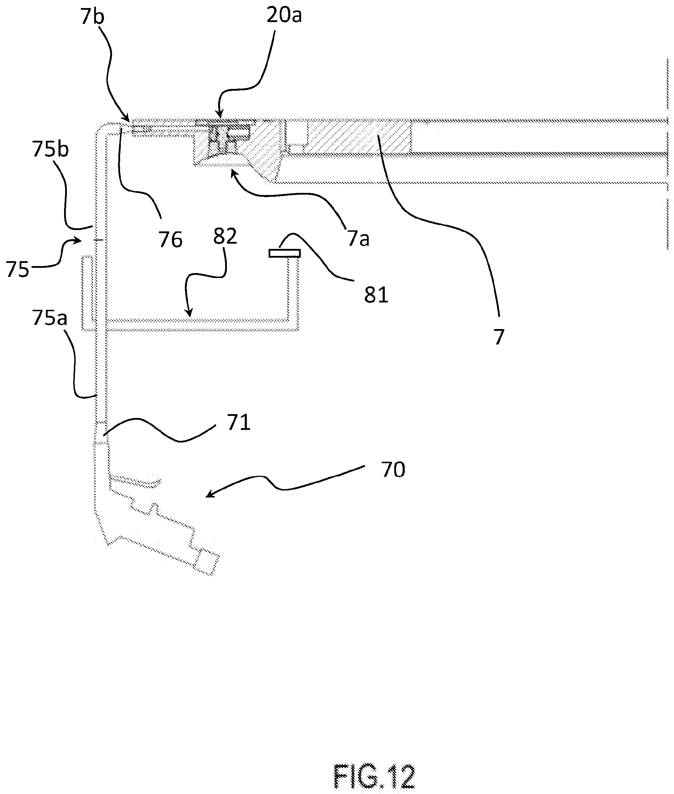

Similarly, the upper sidewall plate 7 comprises a through hole 7b open in the insert housing seat 7a. Also in this case, depending on the types of vulcanization mold, such a through hole 7b can extend along a direction parallel to the geometric axis Y, as shown in figures 4, 10 and 11, or along a direction parallel to the center plane X-X, as shown in figure 12.

The insert housing seats 5a and 7a, are in fluid communication with the outside only through the through holes 5b and 7b.

In order to apply the insert 20a in the insert housing seat 7a, an actuating device 50 is used. It is shown in figures 5-9.

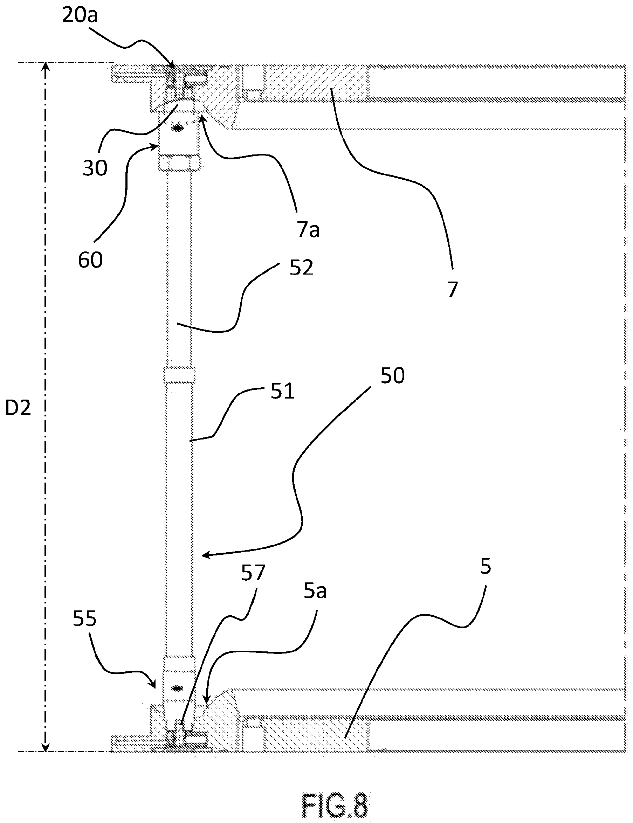

In the example shown herein, the actuating device 50 is a pneumatic cylinder, preferably of the double-acting type, and comprises a cylinder 51 extending along a longitudinal direction L and a piston 52 movable with respect to the cylinder 51 along the longitudinal direction L between a retracted position, shown in figures 5, 6, 7 and 9 and an extended position, shown in figure 8.

The movement of the piston 52 with respect to the cylinder 51 from the aforementioned retracted position to the aforementioned extended position takes place automatically following the actuation by an operator of a control lever or button.

A positioning device 55 is associated with a free end 51a of the cylinder 51.

The positioning device 55 comprises a solid body 56 having a shape matching the shape of the insert housing seat 5a and a fastening pin 57 extending from the solid body 56. Such a fastening pin 57 is identical to the fastening pin 22 of the inserts 20a and 20b.

A visual reference element is preferably provided on one side of the solid body 56, like for example an inscription or a symbol, generically indicated with a black dot and with the reference numeral 56a.

A holding device 60 is associated with a free end 52a of the piston 52 which protrudes from the cylinder 51.

The holding device 60 comprises a hollow body 61 which in turn comprises a recessed seat 62.

A visual reference element is preferably provided on one side of the hollow body 61, like for example an inscription or a symbol, generically indicated with a black dot and with the reference numeral 61a.

As shown in figure 5, the recessed seat 62 is configured to house a support element 30 which is configured to support the insert 20a on the holding device 60.

For this purpose, a fixing element 63 is associated with the hollow body 61 of the holding device 60, the fixing element 63 being configured to act on the support element 30 to fix it in position in the recessed seat 62.

The support element 30 comprises a first portion 31 configured to be housed in the recessed seat 62 and a second portion 32 made in a single piece with the first portion 31 and configured to project with respect to the recessed seat 62 when the first portion 31 is housed in the recessed seat 62.

The second portion 32 of the support element 30 comprises, at an end thereof opposite to the first portion 31, a service surface 35 having a profile matching the profile of the main surface 21a of the insert 20a.

The support element 30 is made of a non-metallic material, preferably a plastic material, for example Teflon.

Preferably, a magnetic element, not visible in the figures, is provided on the service surface 35.

A visual reference element is preferably provided on one side of the second portion 32 of the support element 30, like for example an inscription or a symbol, generically indicated with a black dot and with the reference numeral 32a.

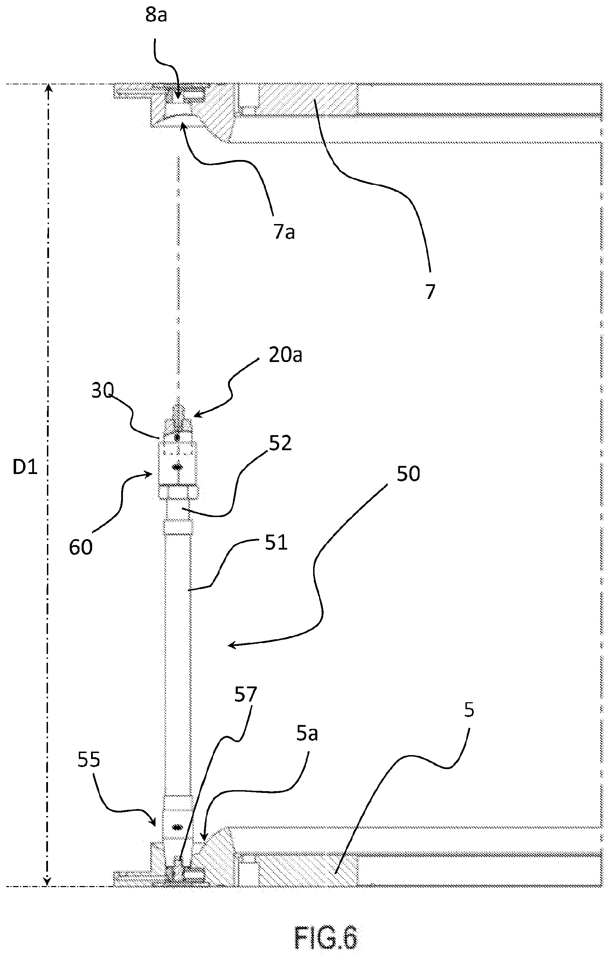

The mounting of the insert 20a in the insert housing seat 7a of the upper sidewall plate 7 comprises an initial operating configuration in which the vulcanization mold 1 is open, with the closing element 6 (and therefore the upper sidewall plate 7) supported by suitable stop members at a predetermined axial distance D1 from the lower sidewall plate 5 (figures 4 and 6).

In such an initial operating configuration, the actuating device 50 has the piston 52 in the retracted position, the positioning device 55 associated with the free end 51a of the cylinder 51, the holding device 60 associated with the free end 52a of the piston 52 and the support element 30 housed in the recessed seat 62 of the holding device 60. In order to carry out a correct relative positioning between positioning device 55, holding device 60 and support element 30 the operator makes reference to the visual reference element 56a provided on the solid body 56 of the positioning device 55, to the visual reference element 61a provided on the hollow body 61 of the holding device 60 and to the visual reference element 32a provided on the second portion 32 of the support element 30.

The actuating device 50 is subsequently brought by the operator inside the vulcanization mold 1 and the positioning device 55 is positioned in the insert housing seat 5a of the lower sidewall plate 5 (figure 6). In order to carry out a correct positioning of the actuating device 50 with respect to the insert housing seat 5a the operator makes reference to the visual reference element 56a provided on the solid body 56 of the positioning device 55.

The positioning of the support element 30 in the recessed seat 62 can take place after having positioned the positioning device 55 in the insert housing seat 5a.

The positioning of the positioning device 55 in the insert housing seat 5a provides that the operator exerts a downward thrust on the actuating device 50 until the fastening pin 57 projecting from the solid body 56 of the positioning device 55 inserts into the calibrated hole 6a overcoming the counteracting force exerted by the elastic elements provided in the insert housing seat 5a.

At this point, the insert 20a can be positioned on the support element 30 by coupling the main surface 21a of the insert 20a with the service surface 35 of the support element 30. In order to carry out a correct positioning of the actuating device with respect to the insert housing seat 5a the operator makes reference to the visual reference element 56a provided on the solid body 56 of the positioning device 55. The operating configuration shown in figure 6 is thus reached, in which the insert 20a is preferably held in position on the support element 30 thanks to the magnetic attraction force exerted on the insert 20a by the magnetic element provided on the service surface 35 of the support element 30.

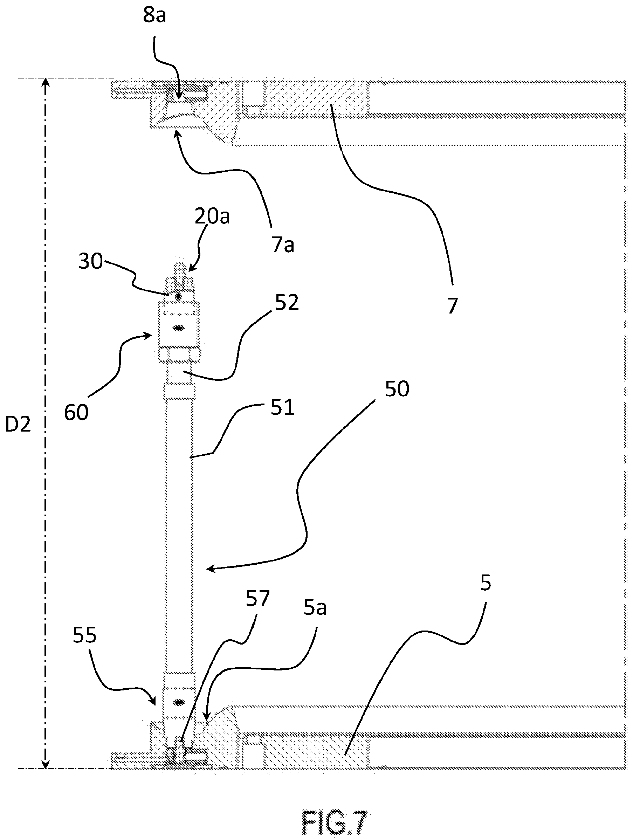

Subsequently, the closing element 6 (and therefore the upper sidewall plate 7) is moved towards the lower sidewall plate 5 until the upper sidewall plate 7 reaches a predetermined axial distance D2 from the lower sidewall plate 5 (figure 7).

At this point the operator activates the actuating device 50.

After such activation, the piston 52 goes into its extended position with respect to the cylinder 51 and the insert 20a enters into the insert housing seat 7a provided in the upper sidewall plate 7. During such insertion, the fastening pin 22 of the insert 20a enters into the calibrated hole 8a, overcoming the counteracting force exerted by the elastic elements provided in the insert housing seat 7a (figure 8).

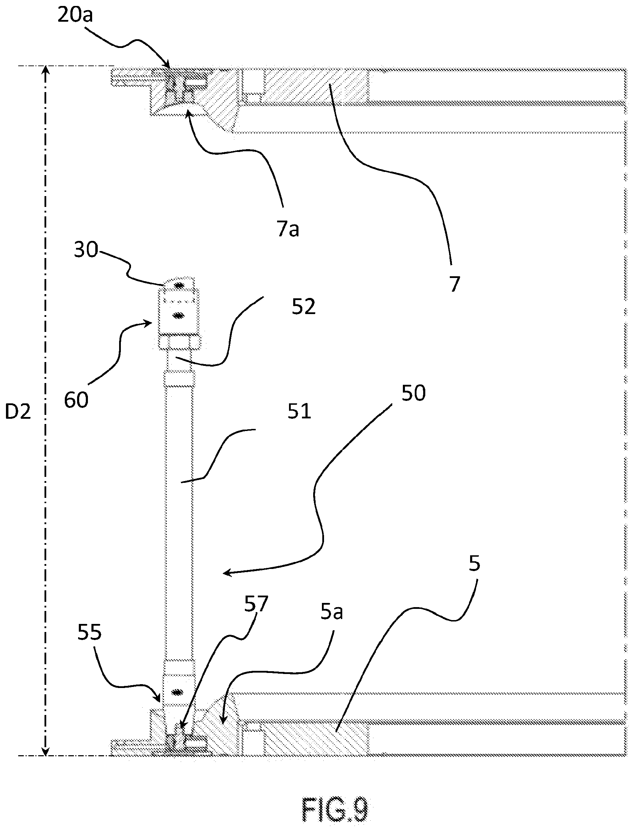

Subsequently, the piston 52 goes back into its retracted position, decoupling the support element 30 from the insert 20a and leaving it in the insert housing seat 7a (figure 9).

The operator therefore removes the actuating device 50 from the vulcanization mold 1 after having removed the positioning device 55 from the insert housing seat 5a of the lower sidewall plate 5.

Thus, the mounting of the insert 20b in the housing seat 5a can occurs. For this purpose, the operator inserts the fastening pin 22 of the insert 20b into the calibrated hole 6a and forcibly pushes the insert 20b into the housing seat 5a so as to overcome the counteracting force exerted on the fastening pin 22 by the elastic elements provided in the insert housing seat 5a.

The vulcanization mold 1 is thus ready to carry out the molding and vulcanization process, which initially comprises positioning the green tyre in the molding cavity 1a by resting its sidewall on the lower sidewall plate 5.

Thereafter, the closing element 6 is closed bringing the upper sidewall plate 7 in contact with the other sidewall of the green tyre and the circumferential sectors 8 are tightly abutted on the lower sidewall plate 5 and on the upper sidewall plate 7.

At this point, the molding and vulcanization process is carried out. During such a process the optical code 500 is printed on the sidewalls of the green tyre, as described above.

Once the molding and vulcanization process is complete, the vulcanization mold 1 is opened and the vulcanized tyre 100 thus made is removed from the vulcanization mold 1.

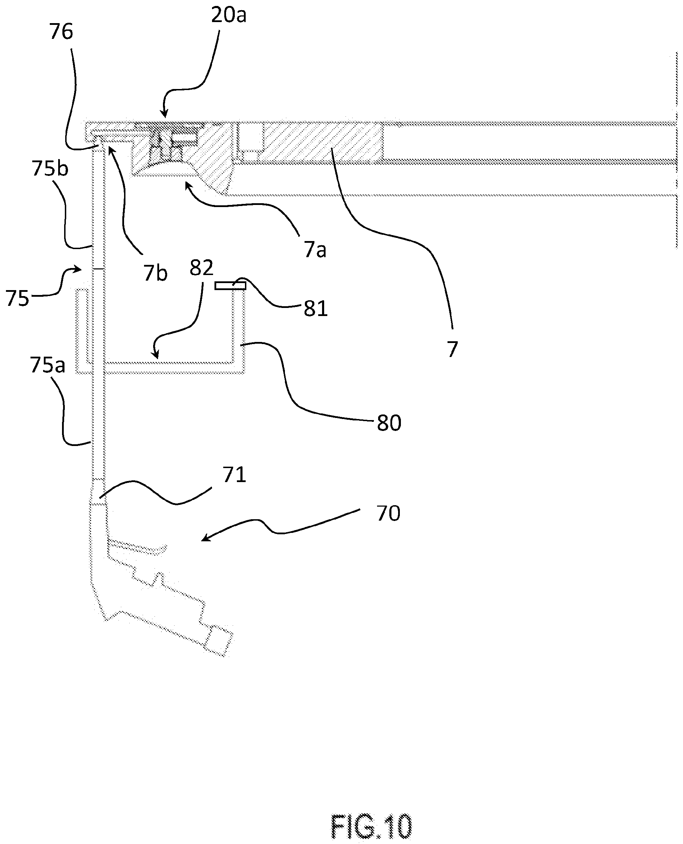

The inserts 20a and 20b can be removed from the respective insert housing seats 7a and 5a to replace them with other inserts after a production cycle is complete or when it is necessary to update the data in said inserts. For the removal of both the inserts a compressed air gun 70 is used, which is shown in figures 10-15.

Figures 10-12 illustrate the operation carried out by the operator to remove the insert 20a from the insert housing seat 7a provided on the upper sidewall plate 7. It should be noted that in order to carry out such an operation the operator mounts an extension element 75 on the emission nozzle 71 of the compressed air gun 70. Such an extension element 75 can be made in a single piece or in plurality of pieces (two pieces in the example of figure 10) associated with each other, depending on the height at which the upper sidewall plate 7 is located when the closing element 6 is supported by the aforementioned stop members and the upper sidewall plate 7 is arranged at the axial distance D1 from the lower sidewall plate 5.

Depending on the type of vulcanization mold 1, and in particular on the position of the through hole 7b in the upper sidewall plate 7, it is possible to use an extension element 75 having a spout 76 extending along the longitudinal direction of the extension element 75, as shown in figure 10, or an extension element 75 having a spout 76 extending along the direction perpendicular to the longitudinal direction of the extension element 75, as shown in figure 12.

As shown in figures 10 and 12, in both cases a collection tank 80 comprising a light source 81 and, preferably, a mat made of magnetic material 82 is coupled with the extension element.

In order to remove the insert 20a from the insert housing seat 7a the operator activates the light source 81 and inserts the spout 76 of the extension element 75 mounted on the compressed air gun 70 into the through hole 7b. Such an insertion is facilitated by the illumination produced by the light source 81.

Subsequently, the operator positions the collection tank 80 below the insert housing seat 7a and activates the compressed air gun 70.

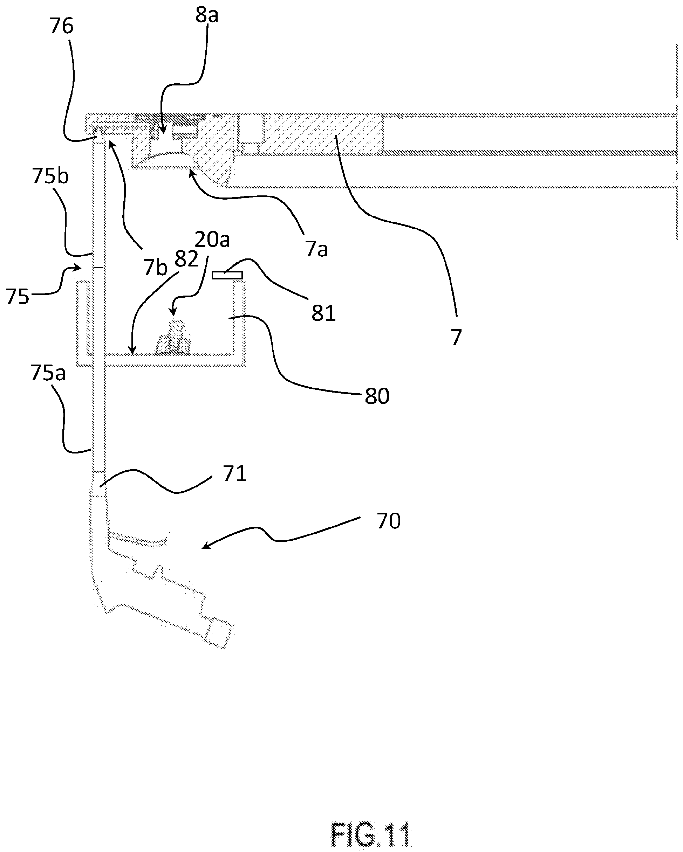

Due to the thrust exerted by the compressed air on the insert 20a, it comes out from the insert housing seat 7a and falls into the collection tank 80, where it remains attached thanks to the magnetic attraction force exerted by the magnetic mat 82 (figure 11).

The operator can thus remove the spout 76 of the extension element 75 from the through hole 7b by suitably moving the compressed air gun 70 and he can move away from the vulcanization mold 1.

Figures 13-15 show the operation carried out by the operator to remove the insert 20b from the insert housing seat 5a provided on the upper sidewall plate 5. It should be noted that in order to carry out such an operation the operator uses, in addition to the compressed air gun 70, a gripping tool 90 having a head 91 on which at least one magnetic element 92 is housed.

In particular, as shown in figure 13 (and similarly in figure 15), the emission nozzle 71 of the compressed air gun 70 is inserted into the through hole 5b and the head 91 of the gripping tool 90 is positioned on the insert 20b.

Thereafter, the operator activates the compressed air gun 70. Due to the thrust exerted by the compressed air on the insert 20b, it comes out from the insert housing seat 5a and contacts the head 91 of the gripping tool 90, where it remains attached thanks to the magnetic attraction force exerted by the at least one magnetic element 92 (figure 14).

The operator can thus remove the emission nozzle 71 of the compressed air gun 70 from the through hole 5b by suitably moving the compressed air gun 70 and he can move away from the vulcanization mold 1.

The present invention has been described with reference to some preferred embodiments thereof. Various modifications can be made to the embodiments described above, still remaining within the scope of protection of the invention, which is defined by the following claims.

## Claims

1. Method for applying an insert to a vulcanization mold of tyres for vehicle wheels, comprising:
- providing a vulcanization mold (1) comprising an upper sidewall plate (7), a lower sidewall plate (5) and a crown of circumferential sectors (8) configured to tightly couple with the upper sidewall plate (7) and the lower sidewall plate (5) to define a molding chamber (1a) configured to house a green tyre to be vulcanized and comprising a center plane (X-X) arranged between the upper sidewall plate (7) and the lower sidewall plate (5), wherein the upper sidewall plate (7) comprises a first insert housing seat (7a) and the lower sidewall plate (5) comprises a second insert housing seat (5a) symmetrically arranged on the opposite side to the first insert housing seat (7a) with respect to said center plane (X-X);
- providing an insert (20a) comprising a main surface (21) containing an information to be printed on a sidewall (108) of the green tyre during the vulcanization of the green tyre in the vulcanization mold (1);
- providing an actuating device (50) comprising a positioning device (55) and a holding device (60);
- positioning the positioning device (55) in the second insert housing seat (5a);
- positioning the insert (20a) on the holding device (60) with said main surface (21) facing towards the holding device (60);
- activating the actuating device (50) until the insert (20a) is housed in the first insert housing seat (7a).

2. Method according to claim 1, wherein the positioning device (55) has a shape at least partially matching a shape of the second insert housing seat (5a) and the second insert housing seat (5a) has a shape identical to a shape of the first insert housing seat (7a).

3. Method according to any one of the previous claims, wherein the positioning device (55) comprises a fastening pin (57) configured to be removably locked in the second insert housing seat (5a).

4. Method according to any one of the previous claims, wherein before positioning the positioning device (55) in the second insert housing seat (5a) the upper sidewall plate (7) is held in position at a first axial distance (D1) from the lower sidewall plate (5) and, after having positioned the positioning device (55) in the second insert housing seat (5a) and before activating the actuating device (50) the upper sidewall plate (7) is moved towards the lower sidewall plate (5) until it reaches a predetermined second axial distance (D2) from the lower sidewall plate (5).

5. Method according to any one of the previous claims, wherein positioning the insert (20a) on the holding device (60) comprises:
- placing a support element (30) on the holding device (60);
- placing the insert (20a) on the support element (30) with said main surface (21) facing towards the support element (30).

6. Method according to claim 5, wherein the support element (30) comprises a service surface (35) having a profile matching a profile of said main surface (21) and wherein positioning the insert (20a) on the support element (30) comprises coupling said main surface (21) and said service surface (35).

7. Method according to claim 5 or 6, wherein the holding device (60) comprises a recessed seat (62) and the support element (30) comprises a first portion (31) configured to be housed in the recessed seat (62) and a second portion (32) configured to protrude from the holding device (60).

8. Method according to claim 7, wherein said first portion (31) has a shape matching a shape of said recessed seat (62).

9. Method according to any one of claims 5 to 8, wherein the positioning of the support element (30) on the holding device (60) is carried out before positioning the positioning device (55) in the second insert housing seat (5a) and the positioning of the insert (20a) on the support element (30) is carried out after having positioned the positioning device (55) in the second insert housing seat (5a).

10. Method according to any one of claims 5 to 9, wherein the insert (20a) is made of a metallic material and the support element (30) is made of a non-metallic material and comprises at least one first magnetic element (40).

11. Method according to any one of the previous claims, wherein said information is contained in an optical code (500).

12. Method according to any one of the previous claims, comprising, after having activated the actuating device (50):
- removing the positioning device (55) from the second insert housing seat (5a);
- applying a further insert (20b) in the second insert housing seat (5a).

13. Method according to any one of the previous claims, wherein said actuating device (50) comprises a cylinder (51) extending along a longitudinal direction and a piston (52) movable with respect to the cylinder (51) along said longitudinal direction between a retracted position and an extended position, the cylinder (51) comprising, at a free end (51a) thereof, said positioning device (55) and the piston (52) comprising, at a free end (52a) thereof protruding from the cylinder (51), said holding device (60).

14. Process for producing tyres for vehicle wheel, comprising:
- building a green tyre;
- actuating a method according to any one of claims 1 to 13;
- arranging the green tyre in the molding chamber (1a);
- molding and vulcanizing the green tyre.

15. Actuating device (50) configured to be activated to carry out the method according to any one of claims 1 to 13, comprising:
- a cylinder (51) extending along a longitudinal direction;
- a positioning device (55) associated with a free end (51a) of the cylinder (51) and configured to be positioned in an insert housing seat (5a) of a sidewall plate (5) of a vulcanization mold (1);
- a piston (52) that is movable with respect to the cylinder (51) along said longitudinal direction between a retracted position and an extended position;
- a holding device (60) associated with a free end (52a) of the piston (52) which protrudes from the cylinder (51).

## Patentansprüche

1. Verfahren zum Anbringen eines Einsatzes an eine Vulkanisationsform von Reifen für Fahrzeugräder, umfassend:
- Bereitstellen einer Vulkanisationsform (1), die eine obere Seitenwandplatte (7), eine untere Seitenwandplatte (5) und eine Krone von Umfangssektoren (8) umfasst, die konfiguriert ist, um mit der oberen Seitenwandplatte (7) und der unteren Seitenwandplatte (5) fest gekoppelt zu sein, um eine Formkammer (1a) zu definieren, die zum Aufnehmen eines zu vulkanisierenden Rohreifens konfiguriert ist und eine Mittelebene (X-X) umfasst, die zwischen der oberen Seitenwandplatte (7) und der unteren Seitenwandplatte (5) angeordnet ist, wobei die obere Seitenwandplatte (7) einen ersten Einsatzaufnahmesitz (7a) umfasst und die untere Seitenwandplatte (5) einen zweiten Einsatzaufnahmesitz (5a) umfasst, der auf der gegenüberliegenden Seite zum ersten Einsatzaufnahmesitz (7a) in Bezug auf die Mittelebene (X-X) symmetrisch angeordnet ist;
- Bereitstellen eines Einsatzes (20a), der eine Hauptoberfläche (21) umfasst, die eine Information enthält, die während der Vulkanisation des Rohreifens in der Vulkanisationsform (1) auf eine Seitenwand (108) des Rohreifens gedruckt werden soll;
- Bereitstellen einer Betätigungsvorrichtung (50), die eine Positionierungsvorrichtung (55) und eine Halterungsvorrichtung (60) umfasst;
- Positionieren der Positionierungsvorrichtung (55) in dem zweiten Einsatzaufnahmesitz (5a);
- Positionieren des Einsatzes (20a) auf der Halterungsvorrichtung (60), wobei die Hauptoberfläche (21) der Halterungsvorrichtung (60) zugewandt ist;
- Aktivieren der Betätigungsvorrichtung (50), bis der Einsatz (20a) im ersten Einsatzaufnahmesitz (7a) aufgenommen ist.

2. Verfahren nach Anspruch 1, wobei die Positionierungsvorrichtung (55) eine Form aufweist, die zumindest teilweise mit einer Form des zweiten Einsatzaufnahmesitzes (5a) übereinstimmt, und der zweite Einsatzaufnahmesitz (5a) eine Form aufweist, die mit einer Form des ersten Einsatzaufnahmesitzes (7a) identisch ist.

3. Verfahren nach einem der vorstehenden Ansprüche, wobei die Positionierungsvorrichtung (55) einen Befestigungsstift (57) umfasst, der konfiguriert ist, um entfernbar in dem zweiten Einsatzaufnahmesitz (5a) verriegelt zu werden.

4. Verfahren nach einem der vorstehenden Ansprüche, wobei vor Positionieren der Positionierungsvorrichtung (55) in dem zweiten Einsatzaufnahmesitz (5a) die obere Seitenwandplatte (7) in einem ersten axialen Abstand (D1) von der unteren Seitenwandplatte (5) in Position gehalten wird, und nach Positionieren der Positionierungsvorrichtung (55) in dem zweiten Einsatzaufnahmesitz (5a) und vor Aktivieren der Betätigungsvorrichtung (50) die obere Seitenwandplatte (7) in Richtung der unteren Seitenwandplatte (5) bewegt wird, bis sie einen vorbestimmten zweiten axialen Abstand (D2) von der unteren Seitenwandplatte (5) erreicht.

5. Verfahren nach einem der vorstehenden Ansprüche, wobei Positionieren des Einsatzes (20a) auf der Halterungsvorrichtung (60) Folgendes umfasst:
- Platzieren eines Stützelements (30) auf der Halterungsvorrichtung (60);
- Platzieren des Einsatzes (20a) auf dem Stützelement (30), wobei die Hauptoberfläche (21) dem Stützelement (30) zugewandt ist.

6. Verfahren nach Anspruch 5, wobei das Stützelement (30) eine Wartungsoberfläche (35) umfasst, die ein Profil aufweist, das mit einem Profil der Hauptoberfläche (21) übereinstimmt, und wobei Positionieren des Einsatzes (20a) auf dem Stützelement (30) Koppeln der Hauptoberfläche (21) und der Wartungsoberfläche (35) umfasst.

7. Verfahren nach Anspruch 5 oder 6, wobei die Halterungsvorrichtung (60) einen vertieften Sitz (62) umfasst und das Stützelement (30) einen ersten Abschnitt (31), der konfiguriert ist, um in dem vertieften Sitz (62) aufgenommen zu werden, und einen zweiten Abschnitt (32) umfasst, der konfiguriert ist, um aus der Halterungsvorrichtung (60) vorzustehen.

8. Verfahren nach Anspruch 7, wobei der erste Abschnitt (31) eine Form aufweist, die mit einer Form des vertieften Sitzes (62) übereinstimmt.

9. Verfahren nach einem der Ansprüche 5 bis 8, wobei das Positionieren des Stützelements (30) an der Halterungsvorrichtung (60) vor Positionieren der Positionierungsvorrichtung (55) in dem zweiten Einsatzaufnahmesitz (5a) ausgeführt wird und das Positionieren des Einsatzes (20a) auf dem Stützelement (30) nach Positionieren der Positionierungsvorrichtung (55) in dem zweiten Einsatzaufnahmesitz (5a) ausgeführt wird.

10. Verfahren nach einem der Ansprüche 5 bis 9, wobei der Einsatz (20a) aus einem metallischen Material hergestellt ist und das Stützelement (30) aus einem nicht metallischen Material hergestellt ist und mindestens ein erstes magnetisches Element (40) umfasst.

11. Verfahren nach einem der vorstehenden Ansprüche, wobei die Informationen in einem optischen Code (500) enthalten sind.

12. Verfahren nach einem der vorstehenden Ansprüche, umfassend, nachdem die Betätigungsvorrichtung (50) aktiviert wurde:
- Entfernen der Positionierungsvorrichtung (55) aus dem zweiten Einsatzaufnahmesitz (5a);
- Anbringen eines weiteren Einsatzes (20b) in den zweiten Einsatzaufnahmesitz (5a).

13. Verfahren nach einem der vorstehenden Ansprüche, wobei die Betätigungsvorrichtung (50) einen Zylinder (51), der sich entlang einer Längsrichtung erstreckt, und einen Kolben (52) umfasst, der in Bezug auf den Zylinder (51) entlang der Längsrichtung zwischen einer eingezogenen und einer ausgestreckten Position bewegbar ist, wobei der Zylinder (51) an einem freien Ende (51a) davon die Positionierungsvorrichtung (55) umfasst und der Kolben (52) an einem freien Ende (52a) davon, das aus dem Zylinder (51) vorsteht, die Halterungsvorrichtung (60) umfasst.

14. Prozess zum Produzieren von Reifen für Fahrzeugräder, umfassend:
- Herstellen eines Rohreifens;
- Betätigen eines Verfahrens nach einem der Ansprüche 1 bis 13;
- Anordnen des Rohreifens in der Formkammer (1a);
- Formen und Vulkanisieren des Rohreifens.

15. Betätigungsvorrichtung (50), die konfiguriert ist, um aktiviert zu werden, um das Verfahren nach einem der Ansprüche 1 bis 13 auszuführen, umfassend:
- einen Zylinder (51), der sich entlang einer Längsrichtung erstreckt;
- eine Positionierungsvorrichtung (55), die einem freien Ende (51a) des Zylinders (51) zugeordnet ist und konfiguriert ist, um in einem Einsatzaufnahmesitz (5a) einer Seitenwandplatte (5) einer Vulkanisationsform (1) positioniert zu werden;
- einen Kolben (52), der in Bezug auf den Zylinder (51) entlang der Längsrichtung zwischen einer eingezogenen Position und einer ausgestreckten Position bewegbar ist;
- eine Halterungsvorrichtung (60), die einem freien Ende (52a) des Kolbens (52) zugeordnet ist, das aus dem Zylinder (51) vorsteht.

## Revendications

1. Procédé d'application d'un insert à un moule de vulcanisation de pneumatiques pour roues de véhicule, comprenant :
- la fourniture d'un moule de vulcanisation (1) comprenant une plaque de paroi latérale supérieure (7), une plaque de paroi latérale inférieure (5) et une couronne de secteurs circonférentiels (8) configurés pour se coupler étroitement avec la plaque de paroi latérale supérieure (7) et la plaque de paroi latérale inférieure (5) pour définir une chambre de moulage (1a) configurée pour loger un pneu vert à vulcaniser et comprenant un plan central (X-X) disposé entre la plaque de paroi latérale supérieure (7) et la plaque de paroi latérale inférieure (5), dans lequel la plaque de paroi latérale supérieure (7) comprend un premier siège de logement d'insert (7a) et la plaque de paroi latérale inférieure (5) comprend un second siège de logement d'insert (5a) disposé symétriquement du côté opposé au premier siège de logement d'insert (7a) par rapport audit plan central (X-X) ;
- la fourniture d'un insert (20a) comprenant une surface principale (21) contenant des informations à imprimer sur une paroi latérale (108) du pneu vert pendant la vulcanisation du pneu vert dans le moule de vulcanisation (1) ;
- la fourniture d'un dispositif d'actionnement (50) comprenant un dispositif de positionnement (55) et un dispositif de maintien (60) ;
- le positionnement du dispositif de positionnement (55) dans le second siège de logement d'insert (5a) ;
- le positionnement de l'insert (20a) sur le dispositif de maintien (60) avec ladite surface principale (21) orientée vers le dispositif de maintien (60) ;
- l'activation du dispositif d'actionnement (50) jusqu'à ce que l'insert (20a) soit logé dans le premier siège de logement d'insert (7a).

2. Procédé selon la revendication 1, dans lequel le dispositif de positionnement (55) présente une forme correspondant au moins partiellement à une forme du second siège de logement d'insert (5a) et le second siège de logement d'insert (5a) présente une forme identique à une forme du premier siège de logement d'insert (7a).

3. Procédé selon l'une quelconque des revendications précédentes, dans lequel le dispositif de positionnement (55) comprend une goupille de fixation (57) configurée pour être verrouillée de manière amovible dans le second siège de logement d'insert (5a).

4. Procédé selon l'une quelconque des revendications précédentes, dans lequel, avant de positionner le dispositif de positionnement (55) dans le second siège de logement d'insert (5a), la plaque de paroi latérale supérieure (7) est maintenue en position à une première distance axiale (D1) de la plaque de paroi latérale inférieure (5) et, après avoir positionné le dispositif de positionnement (55) dans le second siège de logement d'insert (5a) et avant d'activer le dispositif d'actionnement (50), la plaque de paroi latérale supérieure (7) est déplacée vers la plaque de paroi latérale inférieure (5) jusqu'à ce qu'elle atteigne une seconde distance axiale prédéterminée (D2) de la plaque de paroi latérale inférieure (5).

5. Procédé selon l'une quelconque des revendications précédentes, dans lequel le positionnement de l'insert (20a) sur le dispositif de maintien (60) comprend :
- le placement d'un élément de support (30) sur le dispositif de maintien (60) ;
- le placement de l'insert (20a) sur l'élément de support (30) avec ladite surface principale (21) orientée vers l'élément de support (30).

6. Procédé selon la revendication 5, dans lequel l'élément de support (30) comprend une surface de service (35) présentant un profil correspondant à un profil de ladite surface principale (21) et dans lequel le positionnement de l'insert (20a) sur l'élément de support (30) comprend le couplage de ladite surface principale (21) et de ladite surface de service (35).

7. Procédé selon la revendication 5 ou 6, dans lequel le dispositif de maintien (60) comprend un siège en retrait (62) et l'élément de support (30) comprend une première partie (31) configurée pour être logée dans le siège en retrait (62) et une seconde partie (32) configurée pour faire saillie du dispositif de maintien (60).

8. Procédé selon la revendication 7, dans lequel ladite première partie (31) présente une forme correspondant à la forme dudit siège en retrait (62).

9. Procédé selon l'une quelconque des revendications 5 à 8, dans lequel le positionnement de l'élément de support (30) sur le dispositif de maintien (60) est effectué avant le positionnement du dispositif de positionnement (55) dans le second siège de logement d'insert (5a) et le positionnement de l'insert (20a) sur l'élément de support (30) est effectué après avoir positionné le dispositif de positionnement (55) dans le second siège de logement d'insert (5a).

10. Procédé selon l'une quelconque des revendications 5 à 9, dans lequel l'insert (20a) est constitué d'un matériau métallique et l'élément de support (30) est constitué d'un matériau non métallique et comprend au moins un premier élément magnétique (40).

11. Procédé selon l'une quelconque des revendications précédentes, dans lequel lesdites informations sont contenues dans un code optique (500).

12. Procédé selon l'une quelconque des revendications précédentes, comprenant, après avoir activé le dispositif d'actionnement (50) :
- le retrait du dispositif de positionnement (55) du second siège de logement d'insert (5a) ;
- l'application d'un insert supplémentaire (20b) dans le second siège de logement d'insert (5a).

13. Procédé selon l'une quelconque des revendications précédentes, dans lequel ledit dispositif d'actionnement (50) comprend un cylindre (51) s'étendant le long d'une direction longitudinale et un piston (52) mobile par rapport au cylindre (51) le long de ladite direction longitudinale entre une position rétractée et une position étendue, le cylindre (51) comprenant, à son extrémité libre (51a), ledit dispositif de positionnement (55) et le piston (52) comprenant, à son extrémité libre (52a) faisant saillie du cylindre (51), ledit dispositif de maintien (60).

14. Processus de fabrication de pneumatiques pour roue de véhicule, comprenant :
- la construction d'un pneu vert ;
- l'actionnement d'un procédé selon l'une quelconque des revendications 1 à 13 ;
- la disposition du pneu vert dans la chambre de moulage (1a) ;
- le moulage et la vulcanisation du pneu vert.

15. Dispositif d'actionnement (50) configuré pour être activé afin de mettre en œuvre le procédé selon l'une quelconque des revendications 1 à 13, comprenant :
- un cylindre (51) s'étendant le long d'une direction longitudinale ;
- un dispositif de positionnement (55) associé à une extrémité libre (51a) du cylindre (51) et configuré pour être positionné dans un siège de logement d'insert (5a) d'une plaque de paroi latérale (5) d'un moule de vulcanisation (1) ;
- un piston (52) qui est mobile par rapport au cylindre (51) le long de ladite direction longitudinale entre une position rétractée et une position étendue ;
- un dispositif de maintien (60) associé à une extrémité libre (52a) du piston (52) qui fait saillie du cylindre (51).
